# EUROPEAN PATENT APPLICATION

(11) **EP 4 567 340 A1**
(43) Date of publication of application: **11.06.2025**
(21) Application number: 23850194.4
(22) Date of filing: 28.03.2023
(51) Int. Cl.: F24F 11/65, F24F 11/50, F24F 3/14, G06F 8/61, F24F 110/10, F24F 110/20

(54) **AIR CONDITIONER AND CONTROL METHOD THEREOF**

(30) Priority: 04.08.2022 KR 20220097558
(71) Applicant: LG Electronics Inc., Yeongdeungpo-gu Seoul 07336 (KR)
(72) Inventor: KWON, Mingu, Seoul 08592 (KR); HWANG, Soonchul, Seoul 08592 (KR); KIM, Seung Ho, Seoul 08592 (KR); SHIN, Kyuyeol, Seoul 08592 (KR); PARK, Min Jae, Seoul 08592 (KR)
(74) Representative: Vossius & Partner Patentanwälte Rechtsanwälte mbB
(86) International application number: PCT/KR2023/004096
(87) International publication number: WO 2024/029681

(57) **Abstract**

Disclosed are an air conditioner and a control method of the air conditioner to which an automatic drying function can be added by means of a software upgrade of a home appliance and which can determine the time for drying operation on the basis of indoor temperature and humidity. The air conditioner comprises: a communication unit for downloading program data including an automatic drying function for the air conditioner from a server to proceed with the upgrade; and a control unit for controlling an inherent function of the air conditioner and determining the time for drying operation on the basis of indoor temperature and humidity when the automatic drying function is activated.

## Description

### FIELD

The present disclosure relates to an air conditioner, and more particularly, to an air conditioner capable of adding an automatic drying function via software upgrade of an home appliance and a method for controlling the same.

### DESCRIPTION OF RELATED ART

Home appliances such as home products and electronic appliances are disposed and operate in various environments, and a structure or a component of the product may change based on the time of product shipment. For example, after the product is shipped and sold, there may be a need to upgrade a function or add a function to upgrade the same.

However, most of the home appliances update firmware to solve product errors, etc. after product sales. In order to add and upgrade a new function corresponding to various demands of consumers after product shipment, a product having the function added thereto should be purchased again. Thus, it is impossible to additionally provide a function of the home appliance according to a change according to a lifestyle of a consumer or technological development.

In addition, in order to manage various home appliances connected to the Internet, there is a need for the development of a technology that enables a user to easily check an updatable or upgradeable function, request an upgrade, and thus check the status or result of the upgrade.

While the air conditioner operates in a cooling mode, heat exchange between indoor air and refrigerant occurs in an indoor heat exchanger provided in an indoor unit. Thus, a surface of the indoor heat exchanger is exposed to condensed water due to the heat exchange. At this time, moisture remaining on the surface of the indoor heat exchanger causes various kinds of dust, germs, molds, odors, etc.

In order to solve this problem, the air conditioner according to the prior art drives the drying mode for a predetermined time after the cooling mode is finished to remove moisture remaining on the surface of the indoor heat exchanger.

However, since the air conditioner according to the prior art drives the drying mode for a predetermined time, the moisture inside the product is not completely removed such that the effectiveness of the drying mode is deteriorated.

Although most of customers know that a drying time is required to prevent the smell of the heat exchanger caused by use of air conditioner, it is difficult to determine an accurate drying time for which the drying should be activated, and whether the currently set drying time is appropriate. In addition, when the drying mode is activated for a long time unnecessarily, the air conditioner consumes unnecessary electricity. Thus, the technology to determine the appropriate drying time and provide the determined drying time to the customer is required.

Therefore, there is a need for a function capable of automatically calculating the drying operation time of the air conditioner.

### DISCLOSURE

### TECHNICAL PURPOSE

A purpose of the present disclosure is to provide an air conditioner capable of adding an artificial intelligence (AI)-based automatic drying function for automatically determining a drying operation time via software upgrade of a home appliance, and a method for controlling the same.

In addition, a purpose of the present disclosure is to provide an air conditioner capable of determining a drying operation time based on an indoor temperature and an indoor humidity and a method for controlling the same.

In addition, a purpose of the present disclosure is to provide an air conditioner capable of periodically checking a difference between a temperature of a heat exchanger and an indoor temperature and updating a drying operation time so that a drying operation is performed until a time point when the temperature difference falls within a reference value, and a method for controlling the same.

In addition, a purpose of the present disclosure is to provide an air conditioner capable of automatically calculating a drying operation time based on a state of the air conditioner and activating then drying mode in the calculated drying operation time to improve the effectiveness of the drying operation, and a method for controlling the same.

In addition, a purpose of the present disclosure is to provide an air conditioner capable of recalculating a drying operation time during a drying operation and updating a current drying operation time to the recalculated one to smartly dry the moisture remaining on the surface of an indoor heat exchanger, and a method for controlling the same.

In addition, a purpose of the present disclosure is to provide an air conditioner capable of automatically calculating and setting a drying operation time to improve user convenience, and a method for controlling the same.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means recited in the claims or combinations thereof.

### TECHNICAL SOLUTION

The air conditioner according to an embodiment adds an AI-based automatic drying function for automatically determining a drying operation time via software upgrade of a home appliance.

Specifically, the program data including the automatic drying function of the air conditioner is downloaded from the server and the air conditioner is upgraded based on the downed program data.

In addition, the air conditioner according to an embodiment determines a drying operation time based on the indoor temperature and the indoor humidity.

Specifically, the absolute humidity is calculated using an area size of a heat exchanger, an air volume, indoor temperature, and indoor humidity, and the drying operation time is calculated based on the absolute humidity.

In addition, the air conditioner according to an embodiment periodically checks a difference between a temperature of the heat exchanger and the indoor temperature, and performs a drying operation until the temperature difference falls within a reference value.

Specifically, the air conditioner is configured to activate a drying determination index calculation at a time point at which a remaining time of the drying operation time is a first time and to calculate a pipe temperature difference every predetermined time in a response to that the drying determination index calculation is activated, wherein the pipe temperature difference is a difference between a temperature of the heat exchanger and the indoor temperature. Further, in response to that the pipe temperature difference is equal to or greater than a reference temperature value, the air conditioner is configured to re-calculate the drying operation time based on the pipe temperature difference and to update the drying operation time into a re-recalculated drying operation time.

In addition, the air conditioner according to an embodiment automatically calculates the drying operation time based on the state of the air conditioner and executes the drying operation based on the drying operation time, thereby improving the effectiveness of the drying operation.

Specifically, the air conditioner is configured to re-calculate the drying operation time on the difference between the temperature of the heat exchanger and the indoor temperature at the time at which the remaining time of the drying operation time is the first time, and to update the drying operation time into the re-recalculated drying operation time, and then to execute the drying operation based on the updated drying operation time, such that the moisture remaining on the surface of the indoor heat exchanger is smartly dried.

The air conditioner according to an embodiment includes a communication unit configured to download program data including an automatic drying function of the air conditioner from a server and to upgrade the air conditioner based on the downloaded program data; and a controller configured to control a unique function of the air conditioner and determine a drying operation time based on an indoor temperature and an indoor humidity when the automatic drying function is activated.

A method for controlling an air conditioner according to an embodiment includes downloading and storing program data including an automatic drying function of the air conditioner from a server; upgrading the air conditioner based on the program data; controlling a unique function of the air conditioner; and determining a drying operation time based on an indoor temperature and an indoor humidity in response to that the automatic drying function is activated.

### TECHNICAL EFFECT

According to embodiments, the air conditioner and the method for controlling the same according to an embodiment may add the AI-based automatic drying function for automatically determining the drying operation time via software upgrade of a home appliance.

In addition, the air conditioner and the method for controlling the same according to an embodiment may automatically determine the drying operation time based on the indoor temperature and the indoor humidity.

In addition, the air conditioner and the method for controlling the same according to an embodiment may periodically check the difference between a temperature of a heat exchanger and an indoor temperature and updating a drying operation time so that a drying operation is performed until a time point when the temperature difference falls within a reference value.

In addition, the air conditioner and the method for controlling the same according to an embodiment may automatically calculate a drying operation time based on a state of the air conditioner and activate then drying mode in the calculated drying operation time to improve the effectiveness of the drying operation.

In addition, the air conditioner and the method for controlling the same according to an embodiment may recalculate a drying operation time during a drying operation and update a current drying operation time to the recalculated one to smartly dry the moisture remaining on the surface of an indoor heat exchanger.

In addition, the air conditioner and the method for controlling the same according to an embodiment automatically calculate and set the drying operation time such that the user convenience may be improved.

In addition to the above-described effects, the specific effects of the present disclosure will be described together with the details for implementing the present disclosure as set forth below.

### BRIEF DESCRIPTION OF DRAWINGS

FIG. 1 is a diagram schematically illustrating a configuration of a system for upgrading a home appliance according to an embodiment.
FIG. 2 is a diagram specifically illustrating a configuration of a system for upgrading a home appliance according to an embodiment.
FIG. 3 is a block diagram schematically illustrating a configuration of a management server for upgrading a home appliance according to an embodiment.
FIG. 4 is a flowchart illustrating an operation of a management server according to an embodiment.
FIG. 5 is a block diagram schematically illustrating a configuration of an upgradeable home appliance according to an embodiment.
FIG. 6 is a flowchart of a method for upgrading a home appliance according to an embodiment.
FIG. 7 is a block diagram schematically illustrating a home appliance in which a plurality of devices are separately installed among upgradeable home appliances according to an embodiment.
FIG. 8 is a diagram illustrating an overall operation of a method for upgrading a home appliance according to an embodiment.
FIGS. 9 and 10 are diagrams illustrating an upgrade process in a user terminal according to an embodiment.
FIG. 11 is a flowchart of a method for controlling an air conditioner according to an embodiment.

### DETAILED DESCRIPTIONS

The above-described purposes, means and effects will be described in detail with reference to the accompanying drawings, and accordingly, a person having ordinary skill in the art to which the present disclosure belongs will be able to easily implement the technical idea of the present disclosure. In describing the present disclosure, when it is determined that a detailed description of known technologies related to the present disclosure unnecessarily obscures the gist of the present disclosure, the detailed description thereof will be omitted. Hereinafter, preferred embodiments according to the present disclosure will be described in detail with reference to the accompanying drawings. In the drawings, the same reference numerals are used to indicate the same or similar components.

Hereinafter, a system and method for upgrading a home appliance according to some embodiments will be described. In addition, an air conditioner capable of adding an automatic AI-based drying function via software upgrade of a home appliance and a method for controlling the same will be described.

In addition, an air conditioner capable of periodically checking a difference between a temperature of a heat exchanger and an indoor temperature and updating a drying operation time so that a drying operation is performed until a time point when the temperature difference falls within a reference value to improve the effectiveness of a drying operation, and a method for controlling the same will be described.

In the present disclosure, the update of the home appliance may be defined as a process of updating software installed in the home appliance. The software may include firmware for an operation of a controller or a microcomputer of the home appliance and a content program executed on the firmware. For example, the content program may be a program for setting a background screen of a display unit of the air conditioner, a program for setting an AI-based automatic drying function and a drying reservation function of the air conditioner, etc.

In the present disclosure, the update of the home appliance may be defined as including a download and upgrade process. In this regard, the download may be defined as a process of downloading software to be recorded in the home appliance. The upgrade may be defined as a process of writing the downloaded software to the controller or the microcomputer of the home appliance.

In the present disclosure, the upgrade process or the FOTA (Firmware Over The Air) process may be defined as a process of upgrading the downloaded software to the home appliance, that is, a process of recording a program into the controller or the microcomputer of the home appliance.

In the present disclosure, a case in which the home appliance is operating or a case in which the product is operating may be defined as an operating state in which the home appliance performs a unique function. For example, the operation state of performing the unique function of the home appliance may be a state of performing an air conditioning function of the air conditioner, an air cleaning function of an air purifier, a washing function of a washing machine, a drying function of a dryer, etc.

In the present disclosure, a communication unit may perform functions such as data transmission/reception, downloaded software storage, software upgrade schedule setting, and upgrade reservation time tracking, etc.

In the present disclosure, the controller of the home appliance may be defined as a controller that performs a unique function of the home appliance. For example, the controller may perform an air conditioning function of the air conditioner, an air cleaning function of the air purifier, a washing function of the washing machine, a drying function of the dryer, etc.

In the present disclosure, the drying operation or the drying mode of the air conditioner may be defined as an operation of drying the surface of the indoor heat exchanger.

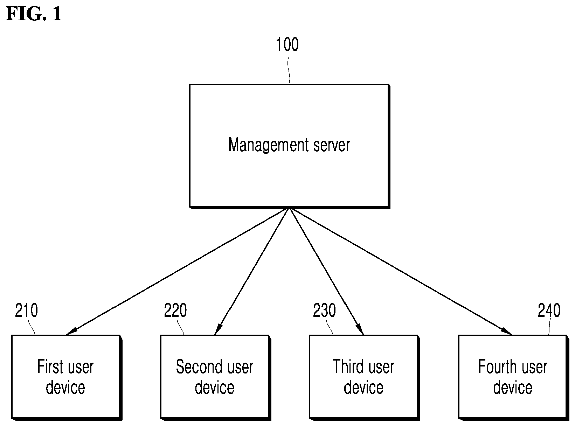

FIG. 1 is a block diagram illustrating a configuration of a system for upgrading home appliances according to an embodiment.

Referring to FIG. 1, a system according to an embodiment may include a management server 100 and a plurality of user devices 210, 220, 230, and 240.

The management server 100 may store therein information on the home appliances to be upgraded and information on the home appliances held by each user.

The information on the home appliances may include program data of the latest version of the home appliance. For example, the information on the home appliances may include at least one of identification information of the home appliances, program data for each previous version of the home appliances, and delta data derived according to a comparison result between program data of each of the previous versions and program data of the latest version.

In this regard, the program data is data related to the operation of the home appliance, and refers to data capable of improving the function of the home appliance or adding a new function to the home appliance. For example, when the home appliance is an air conditioner, the program data may be data for improving a program for adjusting one or more of air volume, wind direction, and indoor temperature, may be data for improving an image displayed on a display module, or may be data for displaying a new image, or may be data related to a voice guided via a voice guide module.

The information on the home appliance held by each user may include user identification information and identification information of the home appliance associated with the user identification information.

The management server 100 may determine whether to upgrade the home appliance and an upgrade scheme based on the information on the home appliance. A detailed method thereof will be described later.

In addition, the management server 100 may transmit data (hereinafter, referred to as upgrade data) for upgrading the function of each of the user devices 210, 220, 230, and 240 thereto. The upgrade data may include the program data or the delta data of the latest version of the home appliance.

The data transmitted by the management server 100 may also include an instruction set to be performed in each of the user devices 210, 220, 230, and 240. The management server 100 may determine a type of the upgrade data or a transmission time thereof, based on whether to upgrade the home appliance and the upgrade scheme as described above.

Each of the plurality of user devices 210, 220, 230, and 240 may include at least one home appliance. In this regard, the home appliance may include various types of devices such as various types of home appliances such as an air conditioner, an air purifier, a refrigerator, a washing machine, a clothes manager, and a water purifier, a mobile device such as a smartphone, and various types of electronic devices included in a vehicle (for example, devices equipped for autonomous driving or devices for controlling an operation of a vehicle, etc.)

In addition, each of the plurality of user devices 210, 220, 230, and 240 may include at least one user terminal. Each of the one or more home appliances may update the program data in response to a file (i.e., a file including the delta data or the instruction set) received from the management server 100.

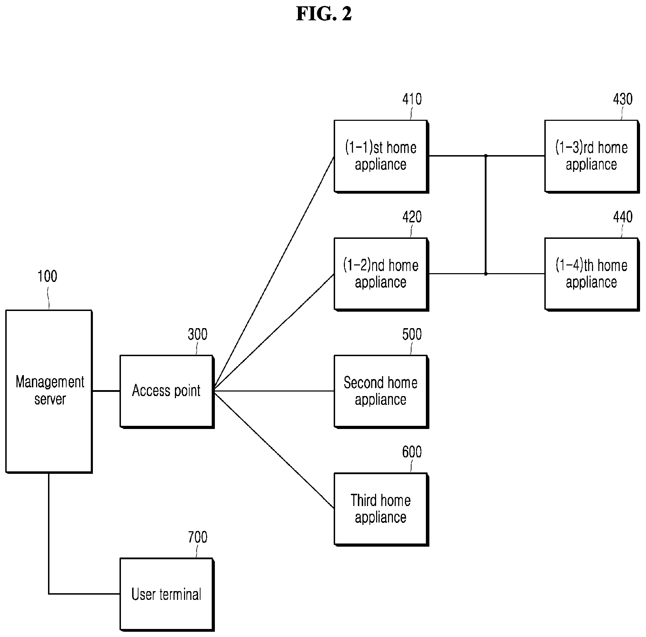

FIG. 2 is a diagram specifically illustrating a configuration of a system for upgrading home appliances according to an embodiment.

Referring to FIG. 2, the system according to an embodiment may include the management server 100, an access point 300, a plurality of home appliances 410, 420, 430, 440, 500, and 600, and a user terminal 700.

Each of the plurality of user devices 210, 220, 230, and 240 of FIG. 1 may include at least one of the access point 300, the plurality of home appliances 410, 420, 430, 440, 500, and 600, and the user terminal 700.

The function of the management server 100 may be the same as that described in FIG. 1.

The access point 300 may serve to relay data between the management server 100 and the home appliances 410, 420, 500, and 600. The access point 300 may be a Wi-Fi router.

Each of the plurality of home appliances 410, 420, 430, 440, 500, and 600 may perform its own function according to execution of a corresponding program.

The home appliances 410, 420, 430, and 440 may be home appliances in which a plurality of devices are separately installed and connected to each other for a predetermined function. For example, the (1-1)st home appliance 410, the (1-2)nd home appliance 420, and the (1-3)rd home appliance 430 may be indoor units of the air conditioner that adjust any one of indoor temperature, humidity, and air quality, and the (1-4)th home appliance 440 may be an outdoor unit of the air conditioner connected to the indoor units. The air quality may include a concentration of fine dust or a concentration of a chemical substance that causes odor.

In addition, each of the (1-1)st home appliance 410 and the (1-2)nd home appliance 420 may include a communication module (e.g., a Wi-Fi module) capable of accessing the access point 300. In addition, the (1-1)st home appliance 410, the (1-2)nd home appliance 420, the (1-3)rd home appliance 430, and the (1-4)th home appliance 440 may respectively include communication modules capable of communicating with each other.

Each of the (1-1)st home appliance 410, the (1-2)nd home appliance 420, and the (1-3)rd home appliance 430 may adjust at least one of the temperature, humidity, and a fine first concentration of indoor air according to the execution of the corresponding program. The (1-4)th home appliance 440 may control the operation of at least one of the compressor and the fan according to the execution of the corresponding program.

Each of the second home appliance 500 and the third home appliance 600 may be a home appliance that operates independently. For example, each of the second home appliance 500 and the third home appliance 600 may be one of various home appliances such as an air purifier, a washing machine, a clothing manager, and a refrigerator. Each of the second home appliance 500 and the third home appliance 600 may include a communication module (for example, a Wi-Fi module).

The user terminal 700 may be a mobile terminal of a user who owns the plurality of home appliances 410, 420, 430, 440, 500, and 600.

According to an embodiment, the access point 300 may be excluded. In this case, each of the home appliances 410, 420, 500, and 600 may access the management server 100 via an Internet network or the like. In this case, each of the home appliances 410, 420, 500, and 600 may access the management server 100 in a wired manner or wirelessly.

In addition, although not shown, the user device may further include a remote controller capable of controlling each of the plurality of home appliances 410, 420, 430, 440, 500, and 600. The remote controller may transmit and receive data to and from each of the home appliances controlled by the remote controller in a short-range wireless communication manner. For example, the remote controller may transmit and receive data to and from home appliances controlled by the remote controller in a Bluetooth manner. According to an embodiment, not only the plurality of home appliances 410, 420, 430, 440, 500, and 600 but also the remote controller or other devices connected thereto may be upgraded.

For example, the user may remotely control the home appliance (e.g., an air conditioner) installed in the home using the user terminal 700 (e.g., a mobile terminal or a tablet) or check the operation state of the home appliance in real time.

The user executes an application for managing the home appliance installed in the user terminal 700, and inputs a control command for the home appliance thereto or requests an inquiry of information related to the operation state of the home appliance thereto. The user terminal 700 transmits the control command to the management server 100 or requests transmission of information about the home appliance to the management server 100, in response to the user's request.

The home appliance is provided with a display for displaying information and a communication device having a communication function.

The management server 100 communicates with the home appliance via a router installed in the home. The management server 100 transmits the control command input by the user to the home appliance via the router, or requests the home appliance to transmit information related to the operation state of the home appliance. The home appliance is controlled according to the control command input by a user, or transmits the information related to the operation state of the home appliance to the management server 100 via the router.

The management server 100 transmits the received information related to the operation state of the home appliance to the user terminal 700. In this process, the user may remotely control the home appliance using the user terminal 700 or inquire the information related to the operation state of the home appliance in real time.

The management server 100 communicates with the home appliance via the router installed in the home. The management server 100 transmits the control command input by the user to the home appliance via the router, or requests the home appliance to transmit the information related to the operation state of the home appliance. The home appliance is controlled according to the control command input by a user, or transmits the information related to the operation state of the home appliance to the management server 100 via the router.

When the user requests upgrade of the software or firmware installed in the home appliance via the application installed in the user terminal 700, the management server 100 transmits new software or firmware to the home appliance. The user may set elements or functions for upgrading the software or firmware of the home appliance via the application installed in the user terminal 700, or may check the software or firmware upgrade state of the home appliance via the application installed in the user terminal 700.

In addition, the home appliance may periodically transmit information of the software installed in the home appliance to the management server 100 via the router. In addition, the home appliance may transmit software information of a separate home appliance connected to another home appliance in a wired manner or wirelessly thereto, for example, an indoor unit, an outdoor unit, a remote controller, etc. together with the information of the software installed in the home appliance. The communication scheme between the home appliance and the management server 100 may be different from the communication scheme between the home appliance and the separate home appliance.

In addition, when the software needs to be updated in the separate home appliance connected to the home appliance in a wired manner or wirelessly, the home appliance may transmit the software received from the management server 100 to the separate home appliance or transmit the software to a plurality of separate home appliances in a broadcasting manner.

The software information transmitted to the management server 100 may include a user ID, a model name, a serial number, a software version, software content, a user's setting, product storage capacity information, etc.

The management server 100 may compare the transmitted software information of the home appliance with the software information registered in the home appliance management server 100, based on the user ID, the model name, the serial number, etc. from the transmitted software information.

The management server 100 may select one of the general update and the automatic update as the software update scheme on the home appliance based on the comparison result, or may select any one of the general update and the automatic update based on the model name, the serial number, etc. of the home appliance.

For example, the management server 100 may select the general update scheme. In this case, when the software installed in the home appliance needs to be updated, the management server 100 may transmit the software update information to the user terminal 700 or the home appliance.

When the user terminal 700 or the home appliance receives the software update information from the home appliance management server, the user terminal 700 may display the software update information on a display thereof.

When there is a software update request from the user, the management server 100 may generate delta data including only a difference between the software installed in the home appliance and the software to be updated, and transmit the delta data together with an instruction to the home appliance via the router or transmit entire software to be updated to the home appliance via the router.

The home appliance may update the software of the home appliance based on the transmitted update software.

Alternatively, the management server 100 may select the automatic update scheme. In this case, the management server 100 may generate the delta data including only a difference between software installed in the home appliance and software to be updated, and transmit the delta data together with an instruction to the home appliance via the router or transmit entire software to be updated to the home appliance via the router.

When the software to be updated is completely downloaded to the home appliance, the home appliance or the user terminal 700 may display software update information on the display thereof.

When there is a software update request from the home appliance or the user terminal 700, the home appliance may update the software of the home appliance based on the transmitted update software.

The management server 100 selects the automatic update scheme. However, when the storage capacity of the home appliance is insufficient or the automatic update fails, the update scheme may switch to the general update scheme.

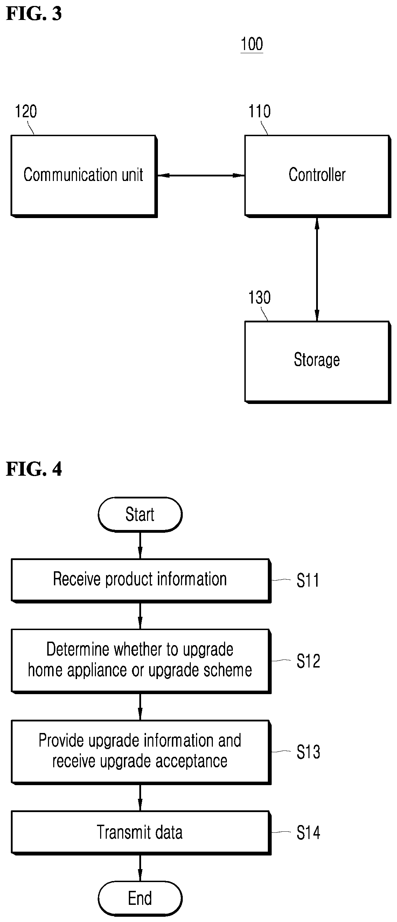

FIG. 3 is a block diagram schematically illustrating a configuration of the management server 100 for upgrading a home appliance according to an embodiment.

Referring to FIG. 3, the management server 100 may include a controller 110, a communication unit 810, and the storage 130.

The controller 110 may transmit the program data stored in the storage 130. In this case, the program data transmitted by the controller 110 may be program data of the latest version. For example, the controller 110 may generate the delta data about each home appliance based on the data stored in the storage 130, and transmit the delta data to the home appliances (410, 420, 500, and 600 of FIG. 2) via the communication unit 810.

When transmitting the program data or the delta data, the controller 110 may also transmit an instruction set to be performed by the controller of the home appliance (410, 420, 500, 600 of FIG. 2).

The controller 110 may determine whether to upgrade the home appliance and the upgrade scheme based on the information on the home appliance.

The controller 110 may include at least one processing unit or memory. In this regard, the processing unit may include, for example, a central processing unit (CPU), a graphic processing unit (GPU), a microprocessor, an Application Specific Integrated Circuit (ASIC), a Field Programmable Gate Arrays (FPGA), etc., and may have a plurality of cores. The memory may be a volatile memory (e.g., RAM, etc.), a non-volatile memory (e.g., ROM, flash memory, etc.), or a combination thereof.

The communication unit 810 may transmit a signal to an external device under the control of the controller 110. In addition, the communication unit 810 may receive a signal from the external device and output the received signal to the controller 110. The communication unit 810 may transmit and receive signals in a wired or wireless manner. The communication unit 810 may include a modem, a network interface card (NIC), an integrated network interface, a radio frequency transmitter/receiver, an infrared port, an USB connection, or other interface for communication with other computing devices.

The storage 130 may store data received via the communication unit 810 under the control of the controller 110, and may store data processed by the controller 110.

For example, the storage 130 may store therein at least one of user identification information, identification information of the home appliance associated with the user identification information, program data for each version of the home appliance, and the delta data derived according to a comparison result between program data of each of the previous versions and program data of the latest version.

FIG. 4 is an operation flowchart for illustrating an operation of the management server 100 according to an embodiment.

Referring to FIG. 4, first, the management server 100 may receive product information from the home appliance in step S11. The product information may include at least one of user identification information, identification information of the home appliance, and a current program version of the home appliance.

Next, the management server 100 may determine whether to upgrade the home appliance or the upgrade scheme based on the product information in step S12. For example, the management server 100 may identify the user's authority or a service being used by the user based on the user's identification information, and determine whether to upgrade the home appliance based on the identifying result. Alternatively, the management server 100 may determine whether to upgrade the home appliance based on the identification information of the home appliance. Alternatively, the management server 100 may determine whether to upgrade the home appliance based on whether the current program version of the home appliance is the latest version.

In addition, the management server 100 may determine the upgrade scheme based on at least one of a function to be upgraded, a capacity of the upgrade data, a format of the upgrade data, an expected transmission time of the upgrade data, and identification information of the home appliance. For example, the management server 100 may determine an appropriate upgrade scheme based on the function to be upgraded.

In one example, the management server 100 may compare the capacity of the upgrade data with at least one reference capacity, and may determine the upgrade scheme based on the comparison result. Alternatively, the management server 100 may determine the upgrade scheme based on whether the upgrade data includes the instruction. Alternatively, the management server 100 may identify the type of the home appliance or the connection state of the communication unit of the home appliance using the identification information of the home appliance, and determine the upgrade scheme based on the identifying result. Alternatively, the management server 100 may identify a transmission time required for transmitting the upgrade data based on the capacity of the upgrade data and the identification information of the home appliance, and determine the upgrade scheme based on the identifying result.

According to an embodiment, the upgrade scheme may include the general upgrade scheme in which all data including a program to perform an upgrade function is transmitted to the home appliance, and the home appliance is upgraded based on the transmitted all data, a delta upgrade scheme in which the delta data is transmitted and the home appliance is upgraded based on the transmitted delta data, and the automatic upgrade scheme in which the upgrade data is transmitted to the home appliance before the user accepts the upgrade, and then the home appliance is upgraded according to the user's acceptance of the upgrade.

According to the general upgrade scheme and the delta upgrade scheme, the management server 100 may transmit the upgrade data after receiving the user's upgrade acceptance. In addition, according to the general upgrade scheme and the delta upgrade scheme, the upgrade data may be transmitted to the home appliance (more specifically, the function module of the home appliance) in a state in which the unique operation of the home appliance is stopped.

In the present disclosure, the unique operation of the home appliance means an operation in which the home appliance performs its own operation. For example, in the case of an air conditioner, an operation of controlling a compressor, a fan, or the like to perform cooling or heating may be an unique operation thereof. In the case of a washing machine, an operation of controlling a motor or a valve for washing laundry may be a unique operation thereof. In the case of a refrigerator, an operation of controlling a compressor or a fan to adjust or maintain the temperature in the refrigerator may be a unique operation thereof.

According to the automatic upgrade scheme, the upgrade data may be transmitted to the home appliance (more specifically, the function module of the home appliance) regardless of whether the unique operation of the home appliance is stopped. That is, according to the automatic upgrade scheme, some or all of the upgrade data may be downloaded to the home appliance while the home appliance performs its own operation. For example, the upgrade data may be downloaded to storage in the communication unit of the home appliance.

When the capacity of the upgrade data is greater than or equal to a first reference capacity, the management server 100 may determine the upgrade scheme as the automatic upgrade scheme. Alternatively, when the capacity of the upgrade data is smaller than a first reference capacity, the management server 100 may determine the upgrade scheme as the delta upgrade scheme.

Alternatively, when the capacity of the upgrade data is smaller than a second reference capacity smaller than the first reference capacity, the management server 100 may determine the upgrade scheme as the general upgrade scheme. The first reference capacity may be 1Mbyte. The second reference capacity may be 128kbyte. This is because, when the capacity of the upgrade data is greater than or equal to the first reference capacity, it takes a lot of time to transmit the data even when the delta upgrade scheme is taken. In addition, when the capacity of the upgrade data is smaller than the second reference capacity, it does not take much time to transmit the data even when the delta upgrade scheme is not used.

Alternatively, when the expected transmission time of the upgrade data is greater than or equal to a first reference time, the management server 100 may determine the upgrade scheme as the automatic upgrade scheme. Alternatively, when the expected transmission time of the upgrade data is smaller than the first reference time, the management server 100 may determine the upgrade scheme as the delta upgrade scheme. Alternatively, when the expected transmission time of the upgrade data is smaller than a second reference time shorter than the first reference time, the management server 100 may determine the upgrade scheme as the general upgrade scheme. The first reference time may be 20 minutes. The second reference capacity may be 2 minutes.

Alternatively, when traffic of a communication line of the home appliance or a function module of the home appliance to be upgraded is equal to or greater than a reference ratio of a capacity of the communication line, the management server 100 may determine the upgrade scheme as a general upgrade scheme or a delta upgrade scheme. Alternatively, the management server 100 may determine the upgrade scheme as the automatic upgrade scheme when the traffic of the communication line of the home appliance or the function module of the home appliance to be upgraded is smaller than the reference ratio of the capacity of the communication line. This is because, when the traffic of the communication line is usually high, a lot of time is required for transmission of the upgrade data even when the automatic upgrade scheme is taken.

Alternatively, when the upgrade data does not include the instruction, the management server 100 may determine the upgrade scheme as the automatic upgrade scheme. The management server 100 may determine the upgrade scheme based on a combination of two or more of the various determination criteria as described above.

Next, the management server 100 may provide the upgrade information to the home appliance or the user terminal 700 and receive the upgrade acceptance from the home appliance or the user terminal 700 in step S13. In addition, the management server 100 may transmit the upgrade data to the home appliance step S14.

The order of steps S13 and S14 may be changed. That is, as described above, when the upgrade is performed according to the general upgrade scheme or the delta upgrade scheme, the management server 100 may perform step S13 and then step S14. Alternatively, when the upgrade is performed according to the automatic upgrade scheme, the management server 100 may perform step S14 and then perform step S13.

Thereafter, the management server 100 may request the home appliance to perform the upgrade operation.

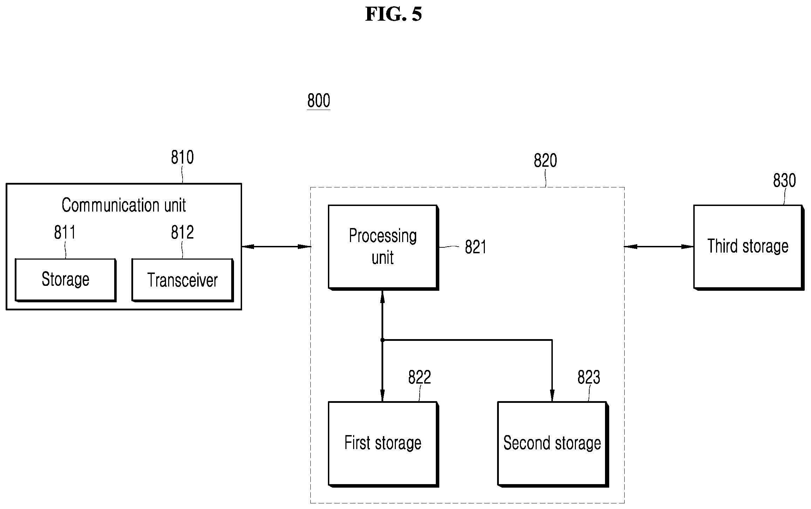

FIG. 5 is a block diagram schematically illustrating a configuration of an upgradeable home appliance 800 according to an embodiment.

Referring to FIG. 5, the home appliance 800 may include a communication unit 810, a controller 820, and third storage 830. The communication unit 810 may include a storage 811, a transceiver 812, and a communication controller, and the controller 820 may include a processing unit 821, first storage 822, and second storage 823. Each of the home appliances 410, 420, 500, and 600 of FIG. 2 may include the configuration as shown in FIG. 4. In addition, the home appliance according to an embodiment may not include some of the first storage 822, the second storage 823, and the third storage 830.

The communication unit 810 may receive data from the management server (100 of FIG. 1 or FIG. 2) and transmit the received data to the controller 820. The data received from the management server (100 of FIG. 1 or FIG. 2) may include at least one of program data, the delta data as described above, and a command executed by the controller 820. The communication unit 810 may include a radio frequency transmitter/receiver, an infrared port, an USB connection, or other interfaces. For example, the communication unit 160 may include a short-range communication module for transmitting and receiving a signal according to a communication standard such as Wi-Fi or Bluetooth.

The storage 811 may store therein the data received from the management server 100 of FIG. 1 or FIG. 2. The storage 811 may be a non-volatile memory. For example, the storage 811 may be a flash memory.

The transceiver 812 may transmit the data stored in the storage 811 to the controller 820.

The communication controller may control the transceiver 812 and the storage 811. The communication controller may correspond to a microcomputer for controlling communication. The communication controller may operate based on firmware.

The communication controller may store the data received from the transceiver 812, particularly, software data, in the storage 811. In addition, the communication controller may transmit the software data stored in the storage 811 to the main controller, for example, the processing unit 821 via a local bus.

The communication controller may track the upgrade reservation time and trigger the upgrade based on the tracking result. When the triggering occurs, the communication controller may proceed with the upgrade or delay the reservation time based on an operation state of the main controller, and synchronize the reservation time with the server 100.

The controller 820 may store therein a program for implementing a function of the home appliance, execute the stored program to perform a predetermined function, and control the home appliance to perform a specific function. In addition, the controller 820 may update the stored program based on the data received from the communication unit 810.

The processing unit 821 may include a central processing unit (CPU), a graphic processing unit (GPU), a microprocessor, an Application Specific Integrated Circuit (ASIC), a Field Programmable Gate Arrays (FPGA), etc., and may have a plurality of cores.

The first storage 822 may be a non-volatile memory. For example, the first storage 822 may be a flash memory. The first storage 822 may store the program therein.

The second storage 823 may be a volatile memory. For example, the second storage 823 may be a RAM. A portion of the program data stored in the first storage 822 may be loaded in the second storage 823, and the program data stored in the second storage 823 may be written in a specific area of the first storage 822.

The third storage 830 may be a non-volatile memory. The third storage may be one of a flash memory, a magnetic storage, and an optical storage. A program for performing a function of the home appliance may be stored in the third storage 830.

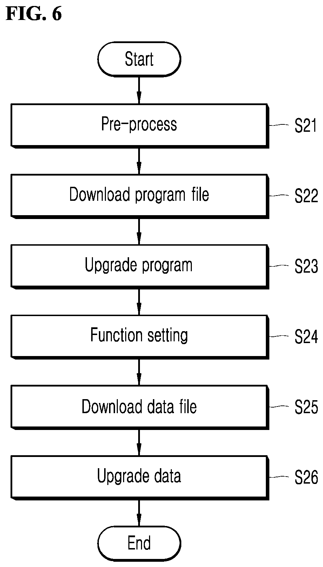

FIG. 6 is a flowchart diagram illustrating a method for upgrading a home appliance according to an embodiment.

Referring to FIG. 6, the home appliance 800 and the management server 100 perform a pre-process to upgrade to a program of a home appliance having a new function in S21.

The home appliance 800 and the management server 100 may be connected to each other to enable mutual communication, upgrade-related information may be stored in the storage 130 of the management server 100, and an upgrade schedule including an upgrade period, an upgrade reservation, etc. may be set. In addition, the upgrade schedule may include a notification schedule notifying the user of upgrade completion after the upgrade completion.

Further, a program file or a data file (upgrade file) for upgrading the home appliance 800 is registered in the management server 100. When the administrator uploads the upgrade file to the management server 100, the upgrade file is stored in the storage 130. When the upgrade file is a data file, the administrator may set whether the upgrade file can be automatically downloaded as will be described later when uploading the upgrade file to the management server 100.

In addition, the management server 100 and the home appliance 800 communicate with each other. Thus, the management server 100 or the home appliance 800 may recognize that the upgrade of the home appliance 800 is required because the version of the program or data installed in the home appliance 800 is different from the version of the upgrade file (program file or data file) registered in the management server 100.

The upgrade file registered in the management server 100 may be used to upgrade only one of the plurality of home appliances 410, 420, 430, 440, 500, and 600, or may be used to upgrade at least two among the plurality of home appliances 410, 420, 430, 440, 500, and 600, for example, all of the (1-1)st home appliance 410, the (1-2)nd home appliance 420, and the (1-3)rd home appliance 430 which are indoor units of the air conditioner. Accordingly, hereinafter, the home appliance 800 to be upgraded means one or more home appliances 800 to which the upgrade file may be applied among the plurality of home appliances 410, 420, 430, 440, 500, and 600.

In a last pre-process, the management server 100 checks the user's agreement to downloading the program file and upgrading the home appliance 800. The management server 100 checks whether the user agrees to upgrade the program via the user terminal 700 or the home appliance 800. When the user's agreement to the program upgrade is not input to the user terminal 700 or the home appliance 800, the step to be described later is not executed.

When the user's agreement to the program upgrade is input thereto, the management server 100 and the home appliance 800 start downloading the program file among the upgrade files in S22. The controller 110 of the management server 100 transmits the program file stored in the storage 130 via the communication unit 810.

The communication unit 810 of the home appliance 800 may receive the program file, and the first storage 822, the second storage 823, or the third storage 830 of the home appliance 800 may store the received program file therein. Hereinafter, the storage 822, 823, or 830 in which the program file is stored mean the first storage 822, the second storage 823, or the third storage 830.

When the reception of the program file by the home appliance 800 has been completed, the home appliance 800 notifies the management server 100 that the download thereof has been completed. The controller 820 of the home appliance 800 checks a checksum of the program file stored in the storage 822, 823, or 830 to identify that the download has been completed, and transmits a download completion message to the management server 100 via the communication unit 810.

When the program file download into the home appliance 800 has been completed, the home appliance 800 performs program upgrade in S23. The controller 820 of the home appliance 800 installs the program file stored in the storage 822, 823, or 830 to upgrade the program stored in the storage 822, 823, or 830. The controller 820 of the home appliance 800 may change the current version of the program to the version of the installed program file, store the changed version in the storage 822, 823, or 830, and transmit device information including the version information of the program to the management server 100 via the communication unit 810.

The controller 820 of the home appliance 800 implements a new function added thereto via the program upgrade, and provides information on the new function added thereto to the management server 100 via the communication unit 810. The management server 100 provides the information on the added new function to the user terminal 700.

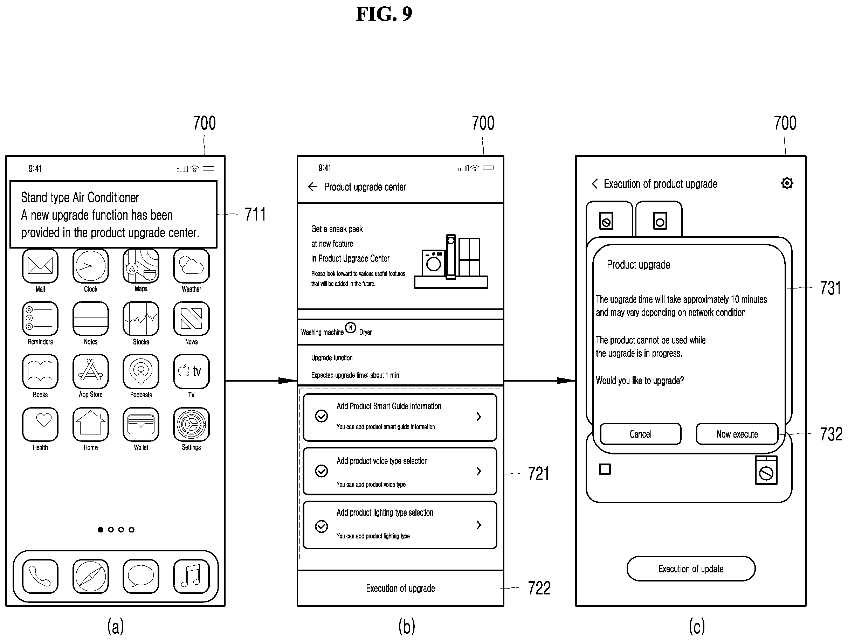

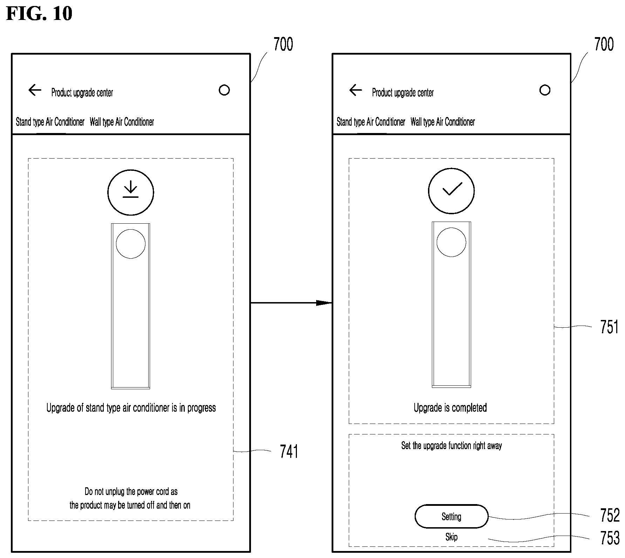

The user terminal 700 receives a user's setting on the added function in S24. The user terminal 700 displays the new function added to the home appliance 800 from the management server 100 thereon, and provides a setting screen on the function. The user sets the new function via the user terminal 700. For example, when a new function is added so that a voice type of the voice guidance of the home appliance 800 may be selected from a female voice and a male voice, compared to a previous function in which only the female voice is selected, the user may set the voice type of the voice guidance as the male voice. A detailed description thereof will be described later with reference to FIGS. 9 and 10. The user terminal 700 transmits the user's setting on the function to the management server 100.

The management server 100 and the home appliance 800 start downloading a data file corresponding to the user's setting among the upgrade files in S25. In the above-described example, when the user sets the voice type of the voice guidance as a male voice, the controller 110 of the management server 100 transmits a data file corresponding to the male voice among the data files to the storage 130 via the communication unit 810. The communication unit 810 of the home appliance 800 may receive a data file selected according to a user's setting, and the first storage 822, the second storage 823, or the third storage 830 of the home appliance 800 may store the received data file therein.

When the reception of the data file has been completed, the home appliance 800 notifies the management server 100 that the download has been completed. The controller 820 of the home appliance 800 checks the checksum of the data file stored in the storage 822, 823, or 830 to identify that the download has been completed, and transmits a download completion message to the management server 100 via the communication unit 810. When the data file download has been completed, the management server 100 checks the user's agreement to the data upgrade of the home appliance 800 using the downloaded data file.

The management server 100 checks whether the user agrees to upgrade data via the user terminal 700 or the home appliance 800. According to an embodiment, the data upgrade to be described below may be automatically performed without receiving a user's agreement to the data upgrade via the user terminal 700 or the home appliance 800.

The home appliance 800 performs data upgrade in S26. The controller 820 of the home appliance 800 installs the data file stored in the storage 822, 823, or 830 to upgrade the data stored in the storage 822, 823, or 830. The controller 820 of the home appliance 800 may change only a memory address of the data file stored in the storage 822, 823, or 830 and install the data file in which only the memory address has been changed. The controller 820 of the home appliance 800 may preserve data irrelevant to the user's setting and add data selected according to the user's setting, or delete data irrelevant to the user's setting and install only the data selected according to the user's setting.

The controller 820 of the home appliance 800 may change the current version of the data to the version of the installed data file, store the changed version thereof in the storage 822, 823, or 830, and transmit device information including the version information of the data to the management server 100 via the communication unit 810.

In the above-described process, the order in which the user's agreement is received in the process of downloading (S22) the program file to add the new function and performing the upgrading (S23), and the order in which the user's agreement is received in the process of downloading (S25) the data file selected according to the user's setting on the added function and performing the upgrading (S26) are different from each other.

Regarding the program file, the user's agreement to the program upgrade is first received, and then, when the user's agreement has been input, the program file is downloaded (S22) and the upgrade is performed (S23).

Regarding the data file, after downloading the data file for data upgrade (S25), the user's agreement to the data upgrade is input, and then, when the user's agreement has been input, the upgrading of the data file is performed (S26).

When the data file selected according to the user's setting is previously absent data due to the newly added function according to an embodiment or setting, the data file may be downloaded (S25) and upgraded (S26) without the user's agreement.

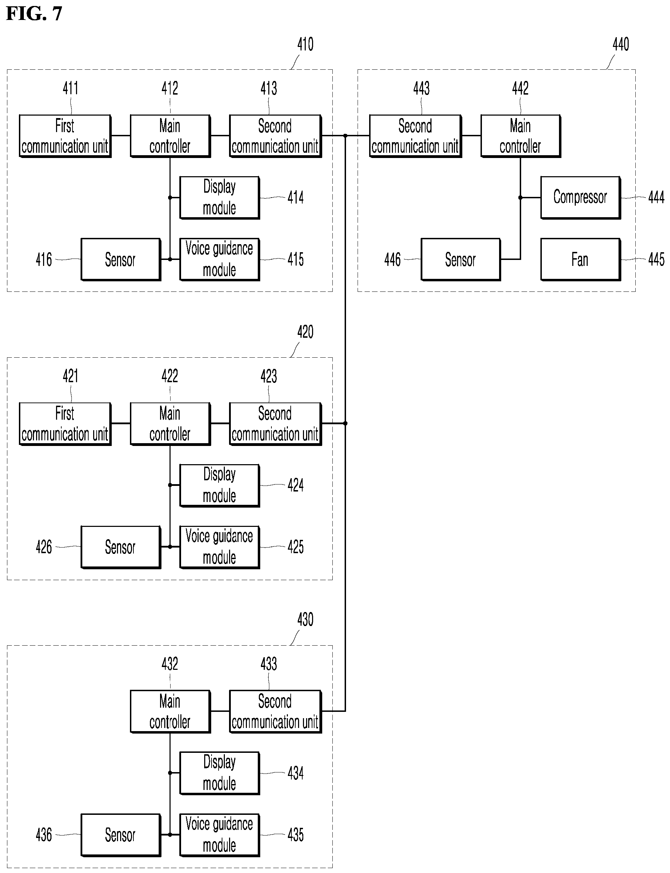

FIG. 7 is a block diagram schematically illustrating a home appliance in which a plurality of devices are separately installed among upgradeable home appliances according to an embodiment.

Referring to FIG. 7, the (1-1)st home appliance 410, the (1-2)nd home appliance 420, and the (1-3)rd home appliance 430 may be indoor units of the air conditioner, and the (1-4)th home appliance 440 may be an outdoor unit of the air conditioner. In addition, the (1-1)st home appliance 410 and the (1-2)nd home appliance 420 may access the management server 100 via the access point 300 or the Internet network.

The (1-1)st home appliance 410 may include a first communication unit 411, a main controller 412, and a second communication unit 413. According to an embodiment, the (1-1)st home appliance 410 may further include at least one of a display module 414, a voice guidance module 415, and a sensor 416.

The first communication unit 411 may receive data from the management server 100 and transmit the received data to the main controller 412. The first communication unit 411 may have the same configuration as that of the communication unit 810 of FIG. 5 and may perform the same function as that of the communication unit 810 of FIG. 5.

The main controller 412 may receive data from the first communication unit 411 and transmit the received data to the second communication unit 413. When the data received from the first communication unit 411 is data used in the display module 414 or the voice guidance module 415, the main controller 412 may transmit the data to the display module 414 or the voice guidance module 415. The main controller 412 may have the same configuration as that of the communication unit 810 of FIG. 5 and may perform the same function as that of the communication unit 810 of FIG. 5.

The second communication unit 413 may transmit and receive data to and from at least one of the (1-2)nd home appliance 420, the (1-3)rd home appliance 430, and the (1-4)th home appliance 440.

In one example, the second communication unit 413 may transmit and receive data in an asynchronous serial communication scheme. The second communication unit 413 may implement hardware of the home appliance more simply by using the asynchronous serial communication scheme. In addition, the second communication unit 413 may transmit and receive data at a rate of 4800bps to 4Mbps. Preferably, the second communication unit 413 may transmit and receive data at a rate of 9600bps.

The (1-1)st home appliance 410 may be an indoor unit of the air conditioner, and the (1-4)th home appliance 440 may be an outdoor unit of the air conditioner.

In consideration of the distance between the indoor unit of the air conditioner and the outdoor unit of the air conditioner and the surrounding environment thereof in a general installation environment, the communication speed may allow communication reliability to be secured and the transmission speed to be increased at the same time. For example, the second communication unit 413 may include a universal asynchronous receiver/transmitter (UART), and may transmit and receive data in an RS485 communication scheme. The second communication unit 413 may include a storage capable of storing data therein.

The display module 414 may visually display various information thereon for user convenience. For example, the display module 414 may display at least one of information related to an operation of the home appliance, information related to a state of the home appliance, and other life information thereon.

The display module 414 may operate under the control of the main controller 412 or may include a separate display controller. Predetermined data may be transmitted from the management server to drive the display module 414. The display module 414 may receive the data via the main controller 412.

The voice guidance module 415 may represent various information in a sound manner for the user's convenience. In a similar manner to the display module 414, the voice guidance module 415 may also output at least one of information related to the operation of the home appliance, information related to the state of the home appliance, and other living information in a sound form.

The voice guidance module 415 may operate under the control of the main controller 412 or may include a separate voice controller. Predetermined data may be transmitted from the management server for driving the voice guidance module 415. The voice guidance module 415 may receive the data via the main controller 412.

The sensor 416 may obtain information related to the operation of the home appliance. For example, when the home appliance is an air conditioner, the sensor 416 may sense at least one of an indoor temperature, a temperature of discharged air discharged from the air conditioner, an indoor humidity, and a temperature or pressure of a circulating refrigerant. When the home appliance is an air purifier, the sensor 416 may detect at least one of indoor temperature, humidity, and air quality. The sensor 416 may include at least one sensor.

The (1-2)nd home appliance 420 may have substantially the same configuration as that of the (1-1)st home appliance 410. That is, each of a first communication unit 421, a main controller 422, a second communication unit 423, a display module 424, a voice guidance module 425, and a sensor 426 may be substantially identical with each of the first communication unit 411, the main controller 412, the second communication unit 413, the display module 414, the voice guidance module 415, and the sensor 416.

The (1-3)rd home appliance 430 may be substantially identical with the (1-1)st home appliance except that the (1-3)rd home appliance 430 does not include the first communication unit. That is, each of a main controller 432, a second communication unit 433, a display module 434, a voice guide module 435, and a sensor 436 may be substantially identical with each of the main controller 412, the second communication unit 413, the display module 414, the voice guide module 415, and the sensor 416.

A main controller 442 and a second communication unit 443 of the (1-4)th home appliance 440 may be substantially identical with the main controller 412 and the second communication unit 413 of the (1-1)st home appliance 410, respectively. The (1-4)th home appliance 440 may be an outdoor unit of the air conditioner. In this case, the (l-4)th home appliance 440 may further include a compressor 444, a fan 445, etc.

The main controller 442 may control the compressor 444, the fan 445, etc. using the program included in the data received from the (l-1)st home appliance 410. The (l-4)th home appliance 440 may also include a sensor 446 for acquiring information related to the operation of the home appliance. When the (1-4)th home appliance 440 is the outdoor unit of the air conditioner, the sensor 446 may sense at least one of the pressure or temperature of the refrigerant, the outdoor temperature, and the outdoor humidity. The sensor 446 may include at least one sensor.

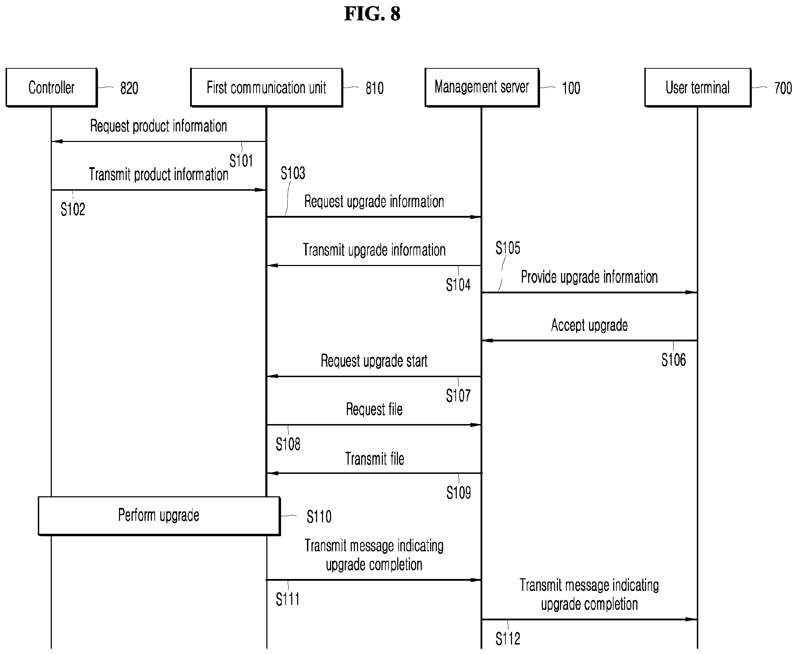

FIG. 8 is a diagram illustrating an overall operation of a method for upgrading a home appliance according to an embodiment.

Referring to FIG. 8, the method for upgrading the home appliance according to an embodiment may be applied when the upgrading is performed according to the above-described general upgrade scheme or delta upgrade scheme.

First, the communication unit 810 may request information (product information) on the home appliance to the controller 820 (step S101).

The product information may be identification information of the home appliance. The identification information of the home appliance may include one or more of a serial number and a model name of the home appliance. In step S101, the management server 100 may request information about the home appliance to the communication unit 810, and in response to the request, the communication unit 810 may request information about the home appliance to the controller 820.

Next, the controller 820 may transmit information on the home appliance (e.g., identification information of the home appliance) to the communication unit 810 in response to the product information request (step S102).

Next, the communication unit 810 may request information on whether the home appliance is to be upgraded to the management server 100 (step S103). In this regard, the communication unit 810 may transmit information on the home appliance (identification information of the home appliance) to the management server 100.

In addition, the communication unit 810 may additionally transmit user information to the management server 100. The communication unit 810 may transmit and receive data to and from the management server 100 via the router. The router may be the access point of FIG. 2.

Next, the management server 100 may transmit the upgrade information to the communication unit 810 (step S104).

The upgrade information may include at least one of information on whether the home appliance as identified based on the information on the home appliance is to be upgraded, and information on an item or content thereof to be upgraded.

The management server 100 may determine whether to upgrade the home appliance. Further, the management server 100 may determine an upgrade scheme. For example, the management server 100 may determine an item to be upgraded, and determine the upgrade scheme based on the determined item. The upgrade scheme may include a full upgrade, a difference upgrade, and a background upgrade.

In addition, the management server 100 may also provide the upgrade information to the user terminal 700 (step S105). The management server 100 may search for information on the user of the home appliance using the information stored in the storage (130 of FIG. 3), or may receive the user information from the communication unit 810.

Next, when the user accepts the upgrade using the user terminal 700, information on the upgrade acceptance may be transmitted from the user terminal 700 to the management server 100 (step S106).

Instead of accepting the upgrade using the user terminal 700, the user may accept the upgrade using an input/output device of the home appliance.

In response to the user's acceptance of the upgrade, the management server 100 may request the communication unit 810 to start the upgrade (step S107). In this step, the management server 100 may determine an upgrade scheme. The determination of the upgrade scheme will be easily understood with reference to the description of step S104.

The communication unit 810 may request file transmission in response to the upgrade start request of the management server 100 (step S108).

The management server 100 may transmit a file including data for upgrading the home appliance to the communication unit 810 in response to the file transmission request of the communication unit 810 (step S109). The data for the upgrade may include at least one or more of the latest version of the program data, the delta data, and/or the instruction set.

The communication unit 810 and the controller 820 may update the program of the home appliance using the file received from the management server 100 (step S110).

When the upgrade has been completed, the communication unit 810 may transmit the message indicating the completion of the upgrade to the management server 100 (step S111).

The management server 100 may provide information related to the upgrade completion to the user terminal in response to the upgrade completion message received from the communication unit 810 (step S112).

FIGS. 9 and 10 are diagrams illustrating an upgrade process in a user terminal according to an embodiment.

(a) in FIG. 9 is an example diagram illustrating a pop-up indicating that the user terminal 700 is ready to upgrade the home appliance 800. (b) in FIG. 9 is an example diagram in which the user terminal 700 displays information on the upgrade of the home appliance 800. (c) in FIG. 9 is an example diagram showing a screen on which the user terminal 700 inputs the agreement to the upgrade of the home appliance 800. FIG. 10 is an example diagram in which the user terminal 700 displays that upgrade of the home appliance 800 is in progress. Further, FIG. 10 is an example diagram in which the user terminal 700 displays that the upgrade of the home appliance 800 has been completed.

Referring to (a) in FIG. 9, the user terminal 700 may display a pop-up 711 indicating that upgrading of at least one home appliance 800 in the home is possible. The management server 100 transmits upgrade information including an notification indicating that the upgrade is possible, a type of a function implemented via the upgrade, and a description of the function to the user terminal 700 (S11 and S105). When the upgrade information is received by the user terminal 700, the user terminal 700 may display the pop-up 711 via an application (e.g., a LG ThinQ application).

Referring to (b) in FIG. 9, the user terminal 700 may display the type and description of the function implemented via the upgrade among the upgrade information on the application screen. The application may display a screen 721 for selecting the type and description of the function of the home appliance 800 to be upgraded and a button 722 for requesting the upgrade of the selected function.

Referring to (c) in FIG. 9, the user terminal 700 may display a pop-up 731 for inquiring whether to upgrade at least one function of the home appliance 800 and a button 732 for inputting an upgrade agreement on an application screen. When the user selects the upgrade agreement on the button 732, the program file is downloaded (S12 and S109).

Referring to FIG. 10, the user terminal 700 displays a screen 741 indicating that the home appliance 800 is being upgraded on an application screen. When the screen 741 indicating that the home appliance 800 is being upgraded is displayed, the download is performed (S12, S109) or the upgrade is performed (S13, S110).

Referring to FIG. 10, the user terminal 700 displays a screen 751 indicating that the upgrade of the home appliance 800 has been completed, a button 752 for examining and setting a new function added via the upgrade, and a button 753 for skipping the function setting on the application screen (S112).

After the operation such as cooling or dehumidification operation is performed in the air conditioner, and when the operation has been terminated, the cold temperature of the heat exchanger pipe and the relatively warm temperature of the indoor temperature meet each other to generate condensed water. Thus, odor is generated due to bacteria generated in the process in which the condensed water is naturally dried.

Since the user cannot manage the drying one by one, the automatic drying function is provided so that the condensate may be dried by performing a blowing operation for a preset period of time when the operation is terminated. However, the preset time may be too short or long because the automatic drying function does not provide a proper time duration for which the blowing operation is activated.

Therefore, the air conditioner of the present disclosure is designed to determine how much the drying operation should be performed in the air conditioner and to proceed with the drying operation only for a necessary time duration corresponding thereto.

Although most of customers know that the drying time is required to prevent the smell of the heat exchanger as caused by the use of the air conditioner, it is difficult for the customer to determine how much the drying operation should be performed and whether the currently set drying time duration is appropriate. In addition, it may be determined by the customer that the air conditioner consumes unnecessary electricity when the drying operation is activated for a long time unnecessarily. Thus, the technology to determine the appropriate drying time and provide the determined appropriate drying time to the customer is required.

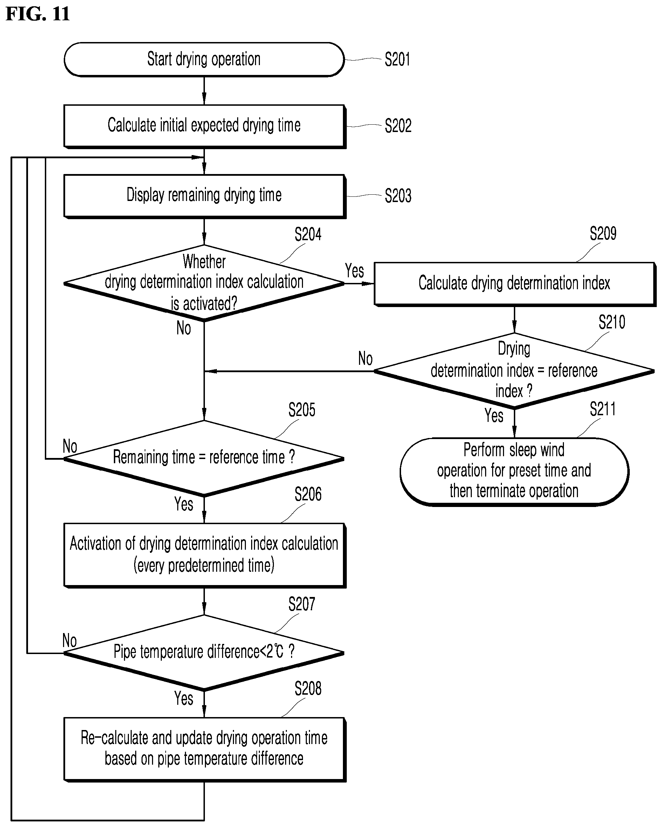

FIG. 11 is a flowchart of a method for controlling an air conditioner according to an embodiment.

Referring to FIGS. 1 to 11, an example in which the home appliance 800 is embodied as the air conditioner is illustrated, and the air conditioner may download a program including an AI-based automatic drying function from the server 100. The home appliance 800 may be upgraded based on the downloaded program.

In one example, the user may select a home appliance to be subjected to program upgrade via an application installed in the user terminal 700. The application may display a download pop-up thereon when there is a program to which a new function for the home appliance has been added.

The user may select the download via the pop-up of the application, and the application may provide an upgrade reservation pop-up.

The user may select an upgrade scheme from the reservation pop-up. For example, the user may select an automatic upgrade after the downloading. Alternatively, the user may select a designation of an upgrade start time.

In this case, the application may provide a dialog for the time selection, and the user may select a time thereon. Alternatively, when the download has been completed, the user may select a notification thereof.

The application of the user terminal 700 may provide the management server 100 with the upgrade scheme selected by the user.

The management server 100 may transmit the upgrade scheme selected by the user to the communication unit 810 of the home appliance 800. The communication unit 810 may perform functions such as data transmission/reception, storage of the downloaded program, setting a program upgrade schedule, and tracking of an upgrade reservation time.

The communication unit 810 of the home appliance 800 may update and set the download schedule, and may trigger a schedule alarm.

The communication unit 810 of the home appliance 800 may provide set reservation FOTA (Firmware Over The Air) information to the management server 100. In one example, the reservation FOTA information may include reservation information updated for program upgrade between the home appliance 800 and the management server 100.

In addition, when the upgrade trigger occurs in response to a user's request, the communication unit 810 of the home appliance 800 may communicate with the processing unit 821 to determine the state of the home appliance 800.

The communication unit 810 may proceed with the upgrade when the state of the home appliance 800 is in the upgradeable state, and postpone the upgrade time when the state of the home appliance 800 is not in the upgradeable state.

When the upgrade is in progress, the communication unit 810 may notify the user terminal 700 that the upgrade is in progress. When the upgrade is postponed, the communication unit 810 may notify the user terminal 700 that the upgrade has been postponed.

The communication unit 810 may determine the state of the home appliance, for example, based on whether the home appliance is abnormal or whether the home appliance is operating, and may perform the upgrade with the downloaded program when the home appliance has no abnormality and is not operating.

The communication unit 810 may automatically postpone the upgrade when the home appliance has the abnormality or is in operation. The communication unit 810 may request the user to turn on the power of the home appliance when the home appliance is turned off.

In addition, when there is the upgrade reservation setting, the communication unit 810 of the home appliance 800 may trigger the upgrade according to the set reservation schedule. The communication unit 810 may determine the state of the home appliance when the upgrade trigger occurs.

In one example, when determining the state of the home appliance, the communication unit 810 may determine whether the program download has been completed, determine whether there is an error in the home appliance, and determine whether the home appliance is operating.

The communication unit 810 may proceed with the upgrade when the download has been completed, there is no product error, and the product is not in operation. The communication unit 810 may postpone the upgrade when the download is not completed, when there is a product error, or when the product is in operation.

In one example, when the upgrade is postponed, the communication unit 810 may delay the upgrade time by a predetermined time, and may provide the changed reservation schedule to the management server 100 to synchronize the reservation schedule with each other.

The communication unit 810 may generate the upgrade trigger at the changed reservation time. The communication unit 810 may perform an operation of determining the state of the home appliance again, and proceed or postpone the upgrade according to the state of the home appliance.

The user may select the AI-based automatic drying function via the application of the user terminal 700 or the display module of the product.

The air conditioner according to an embodiment includes a communication unit 120 that downloads program data including the automatic drying function of the air conditioner from the management server 100 when the automatic drying function is activated and performs an upgrade based on the downloaded program data, and a controller 110 that controls the unique function of the air conditioner and determines a drying operation time based on indoor temperature and indoor humidity when the automatic drying function is activated.

The controller 110 calculates absolute humidity using an area size of the heat exchanger, air volume, indoor temperature, and indoor humidity, and calculates the drying operation time based on the absolute humidity.

The controller 110 activates the drying determination index calculation at a time when a remaining time of the drying operation time is a first time. For example, the first time may be set to 10 minutes.

The controller 110 calculates a pipe temperature difference every predetermined time when the drying determination index calculation is activated. In this regard, the pipe temperature difference may be defined as a difference between the temperature of the heat exchanger and the indoor temperature.

The controller 110 determines every predetermined time whether the pipe temperature difference is equal to or greater than a reference temperature value. For example, the reference temperature value may be set to 2°C, and the predetermined time may be set to 1 minute.

When the pipe temperature difference is equal to or greater than the reference temperature value, the controller 110 re-calculates the drying operation time based on the pipe temperature difference and updates the current drying operation time into the re-calculated one.

When the pipe temperature difference at a current time is smaller than the reference temperature value and the pipe temperature difference at a time before a second time therefrom is smaller than the reference temperature value, the controller 110 determines that the current time is a drying ending time point. For example, the second time may be set to 5 minutes.

The controller 110 performs a sleep wind operation for a third time at the end of drying and then terminates the operation. In an example, the third time may be set to 5 minutes, and an air volume in the sleep wind operation may be set to an air volume corresponding to the lowest reference noise level. A blowing operation time and a blowing mode at the drying ending time may be changed by the user via the terminal. For example, the blowing mode may be set to a natural wind operation mode in which the air volume is variably adjusted.

As described above, the AI-based drying function may be configured to acquire indoor temperature (dry temperature), indoor humidity (relative humidity), and heat exchanger temperature information in real time using the sensor in the product and to calculate the drying time based on the acquired data.

In addition, the AI-based drying function may be configured to calculate an initial expected drying time based on the absolute humidity calculated using the heat exchanger area size of the product, the air volume, the indoor temperature, and the indoor humidity.

In an example, "initial expected drying time=(heat exchanger area size/air volume) x (α x (saturated absolute humidity-absolute humidity)+β+exp (γ x relative humidity)" may be calculated. In this regard, α, β, and γ may be parameter values of the air conditioner.

In addition, the AI-based drying function may be configured to calculate the pipe temperature difference (heat exchanger temperature-indoor temperature) at a time when the remaining time as left from the expected drying time is 10 minutes. Then, when the pipe temperature difference is equal to or greater than 2 degrees C, the AI-based drying function may be configured to newly calculate the expected ending time and update the current expected ending time into the newly calculated one.

In an example, "temperature drop rate per minute = (current operation time-10 minutes)/(pipe temperature difference at a time at which 10 minutes is left from the dry operation time - current pipe temperature difference + 0.1)" may be calculated. Further, "expected ending time = current operation time + (current pipe temperature difference-2) x temperature drop rate + 10 minutes" may be calculated.

In addition, when the current pipe temperature difference is smaller than 2 degrees C and the pipe temperature difference at a time before 5 minutes from the current time is smaller than 2 degrees C, it is determined that the current time is the drying ending time point. Thus, the air conditioner operates at the lowest air volume for 5 minutes and then, the drying function is terminated.

When the upgrade trigger occurs, the communication unit 120 upgrades the automatic drying function according to the operating state of the controller 110.

The communication unit 120 triggers the upgrade according to a request of the user terminal or a preset reservation schedule.

When the upgrade trigger occurs according to a request of the user terminal, and further, when the controller 110 is in an operation state of controlling the unique function of the air conditioner, the communication unit 120 terminates the operation and then performs the upgrade.

When the upgrade trigger occurs according to the reservation schedule, and, further, when the controller 110 is in an operation state in which the controller 110 controls the unique function of the air conditioner, the communication unit 120 delays the upgrade reservation time by a preset time and synchronizes the reservation time thereof with that of the server 10.

The method for controlling an air conditioner according to an embodiment includes downloading program data including an automatic drying function of the air conditioner from the server 100 and storing the downloaded program data, performing upgrade using the program data when the upgrade trigger occurs, and determining a drying operation time based on an indoor temperature and an indoor humidity when the drying function is activated.

After the air conditioner performs an operation such as cooling or dehumidification operation, the air conditioner terminates the operation and then starts a drying operation in S201.

When the automatic drying function is activated, the air conditioner determines the drying operation time based on the indoor temperature and the indoor humidity in S202. In this regard, the air conditioner calculates the absolute humidity using the area size of the heat exchanger, the air volume, the indoor temperature, and the indoor humidity, and calculates the drying operation time based on the absolute humidity.

When the drying operation time has been calculated, the air conditioner proceeds with the drying operation based on the calculated drying operation time and displays the remaining drying time left from the calculated drying operation time in S203.

The air conditioner displays the remaining drying time and checks whether the calculation of the drying determination index is activated in S204. The drying determination index calculation activation may be defined as acquiring the temperature of the heat exchanger and the indoor temperature at a time when the remaining time of the drying operation time is the first time and activating the calculation of the pipe temperature difference therebetween.

The air conditioner activates the drying determination index calculation when the remaining time of the dry operation time is the first time in S205 and S206. For example, the first time may be set to 10 minutes.

The air conditioner calculates the pipe temperature difference every predetermined time when the drying determination index calculation is activated, and determines whether the pipe temperature difference is equal to or greater than the reference temperature value every predetermined time in S207. For example, the reference temperature value may be set to 2°C, and the predetermined time may be set to 1 minute.

When the pipe temperature difference is equal to or greater than the reference temperature value, the air conditioner re-calculates the drying operation time based on the pipe temperature difference and updates the current drying operation time into the re-calculated one in S208.

When the pipe temperature difference at the current time is smaller than the reference temperature value and the pipe temperature difference at a time before the second time from the current time is smaller than the reference temperature value, the air conditioner determines that the current time is the drying ending time point in S209 and S210. For example, the second time may be set to 5 minutes.

That is, when the current pipe temperature difference is smaller than 2°C and the pipe temperature difference at a time before 5 minutes from the current time is smaller than 2°C, the air conditioner may determine that the drying determination index satisfies a reference index and thus determine that the current time is the drying ending time point.

At the end of the drying, the air conditioner performs the sleep wind operation for a third time and then terminates the operation in S211. In an example, the third time may be set to 5 minutes, and an air volume in the sleep wind operation may be set to an air volume corresponding to the lowest reference noise level.

As described above, the air conditioner and the method for controlling the same according to the embodiments may add the AI-based automatic drying function for automatically determining the drying operation time via software upgrading of the home appliance.

In addition, the air conditioner and the method for controlling the same according to an embodiment may automatically determine the drying operation time based on the indoor temperature and the indoor humidity.

In addition, the air conditioner and the method for controlling the same according to an embodiment may periodically check the difference between a temperature of a heat exchanger and an indoor temperature and updating a drying operation time so that a drying operation is performed until a time point when the temperature difference falls within a reference value.

In addition, the air conditioner and the method for controlling the same according to an embodiment may automatically calculate a drying operation time based on a state of the air conditioner and activate then drying mode in the calculated drying operation time to improve the effectiveness of the drying operation.

In addition, the air conditioner and the method for controlling the same according to an embodiment may recalculate a drying operation time during a drying operation and update a current drying operation time to the recalculated one to smartly dry the moisture remaining on the surface of an indoor heat exchanger.

In addition, the air conditioner and the method for controlling the same according to an embodiment automatically calculate and set the drying operation time such that the user convenience may be improved.

Although the present disclosure has been described with reference to the accompanying drawings, the present disclosure is not limited by the embodiments disclosed herein and the drawings, and it is obvious that various modifications may be made by those skilled in the art within the scope of the technical idea of the present disclosure. In addition, although the effects based on the configuration of the present disclosure are not explicitly described and illustrated in the description of the embodiment of the present disclosure above, it is obvious that predictable effects from the configuration should also be recognized.

## Claims

1. An air conditioner comprising:
a communication unit configured to download program data including an automatic drying function of the air conditioner from a server and to upgrade the air conditioner based on the downloaded program data; and
a controller configured to control a unique function of the air conditioner and determine a drying operation time based on an indoor temperature and an indoor humidity when the automatic drying function is activated.

2. The air conditioner of claim 1, wherein the controller is configured to calculate an absolute humidity using an area size of the heat exchanger, an air volume, the indoor temperature, and the indoor humidity, and to calculate the drying operation time based on the absolute humidity.

3. The air conditioner of claim 2, wherein the controller is configured to activate a drying determination index calculation at a time point at which a remaining time of the drying operation time is a first time.

4. The air conditioner of claim 3, wherein the controller is configured to calculate a pipe temperature difference every predetermined time in a response to that the drying determination index calculation is activated,
wherein the pipe temperature difference is a difference between a temperature of the heat exchanger and the indoor temperature.

5. The air conditioner of claim 4, wherein the controller is configured to determine whether the pipe temperature difference is equal to or greater than a reference temperature value every predetermined time.

6. The air conditioner of claim 5, wherein in response to that the pipe temperature difference is equal to or greater than the reference temperature value, the controller is configured to re-calculate the drying operation time based on the pipe temperature difference and to update the drying operation time into a re-recalculated drying operation time.

7. The air conditioner of claim 6, wherein in response to that the pipe temperature difference at a current time is smaller than the reference temperature value and the pipe temperature difference at a time before a second time from the current time is smaller than the reference temperature value, the controller is configured to determine that the current time is a drying ending time point.

8. The air conditioner of claim 7, wherein the controller is configured to perform a sleep wide operation for a third time at the drying ending time point and then to terminate the operation of the air conditioner.

9. The air conditioner of claim 8, wherein an air volume in the sleep wind operation is set to an air volume corresponding to a lowest reference noise level.

10. The air conditioner of claim 1, wherein in response to that an upgrade trigger occurs, the communication unit is configured to perform an upgrade of the automatic drying function based on an operation state of the controller.

11. The air conditioner of claim 10, wherein the communication unit is configured to trigger the upgrade in response to a request of a user terminal or based on a preset reservation schedule.

12. The air conditioner of claim 11, wherein the upgrade trigger occurs in response to the request of the user terminal,
wherein in response to that the controller is in an operation state of controlling a unique function of the air conditioner, the communication unit is configured to terminate the operation and then perform the upgrade.

13. The air conditioner of claim 10, wherein the upgrade trigger occurs based on the reservation schedule,
wherein in response to that the controller is in an operation state of controlling a unique function of the air conditioner, the communication unit is configured to delay an upgrade reservation time by a preset time and to synchronize the upgrade reservation time with an upgrade reservation time of the server.

14. A method for controlling an air conditioner, the method comprising:
downloading and storing program data including an automatic drying function of the air conditioner from a server;
upgrading the air conditioner based on the program data;
controlling a unique function of the air conditioner; and
determining a drying operation time based on an indoor temperature and an indoor humidity in response to that the automatic drying function is activated.

15. The method for controlling the air conditioner of claim 14, wherein the determining of the drying operation time includes:
calculating an absolute humidity using an area size of a heat exchanger, an air volume, the indoor temperature, and the indoor humidity; and
calculating the drying operation time based on the absolute humidity.

16. The method for controlling the air conditioner of claim 14, wherein the method further comprises activating a drying determination index calculation at a time point at which a remaining time of the drying operation time is a first time.

17. The method for controlling the air conditioner of claim 16, wherein the activating of the drying determination index calculation includes calculating a pipe temperature difference every predetermined time, wherein the pipe temperature difference is a difference between a temperature of the heat exchanger and the indoor temperature.

18. The method for controlling the air conditioner of claim 17, wherein the method further comprises:
in response to that the pipe temperature difference is equal to or greater than the reference temperature value,
re-calculating the drying operation time based on the pipe temperature difference and updating the drying operation time into a re-recalculated drying operation time.

19. The method for controlling the air conditioner of claim 19, wherein the method further comprises:
in response to that the pipe temperature difference at a current time is smaller than the reference temperature value and the pipe temperature difference at a time before a second time from the current time is smaller than the reference temperature value,
determining that the current time is a drying ending time point.

20. The method for controlling the air conditioner of claim 19, wherein the method further comprises performing a sleep wide operation for a third time at the drying ending time point and then terminating the operation of the air conditioner,
wherein an air volume in the sleep wind operation is set to an air volume corresponding to a lowest reference noise level.
